# FASCICULE DE BREVET EUROPEEN

(11) **EP 0 467 811 B1**
(45) Date de publication et mention de la délivrance du brevet: **05.10.1994**
(21) Numéro de dépôt: 91420258.5
(22) Date de dépôt: 16.07.1991
(51) Int. Cl.: G01L 9/00

(54) **Micro-capteur de pression**
Miniatur-Druckwandler
Micro-pressure-sensor

(30) Priorité: 20.07.1990 FR 9009468
(43) Date de publication de la demande: 22.01.1992
(73) Titulaire: SEXTANT Avionique, F-92366 Meudon la Forêt Cedex (FR)
(72) Inventeur: Thomas, Isabelle, F-26000 Valence (FR); Lefort, Pierre Olivier, F-26000 Valence (FR)
(74) Mandataire: de Beaumont, Michel

(56) Documents cités:
- US-A- 4 790 192
- US-A- 4 881 056
- INGENIEURS DE L'AUTOMOBILE, juillet 1986, Boulogne, FR, pages 44-47; G. Blasquez et al: "Capteur de pression capacitif micro-électronique"
- ELECTRONICS LETTERS, vol. 24, no. 10, 12 mai 1988, Stevenage, GB, pages 573-574; K.E.B. Thornton et al: 'Novel optically excited resonant pressure sensor"

## Description

La présente invention concerne un micro-capteur de pression à membrane et poutre vibrante et plus particulièrement un tel micro-capteur dont les éléments sensibles sont essentiellement constitués en tirant partie des techniques de gravure du silicium développées ces dernières années pour la fabrication des composants semiconducteurs.

Des capteurs de ce type sont connus dans la technique mais présentent généralement divers inconvénients. Notamment, ils sont souvent difficiles à fabriquer et à connecter.

Ainsi, un objet de la présente invention est de prévoir une nouvelle structure de micro-capteur de pression à éléments actifs en silicium.

Un autre objet de la présente invention est de prévoir une telle structure qui sot particulièrement simple à fabriquer.

Un autre objet de la présente invention est de prévoir une telle structure dans lequel l'acheminement des connexions entre la ou les parties actives et l'extérieur soit particulièrement simple.

Pour atteindre ces objets, la présente invention prévoit un micro-capteur de pression comprenant entre deux plaquettes de matériau isolant : une plaquette de silicium inférieure formant embase ; une plaquette de silicium médiane constituant une membrane entourée d'un cadre, une première partie d'un plot étant formé en un emplacement décentré de la membrane ; et une plaquette de silicium supérieure compenant un cadre correspondant à celui de la plaquette médiane, une deuxième partie dudit plot et une lame de silicium constituant une résonateur reliant le haut du plot à une région haute du cadre. Un intervalle de mesure est ménagé entre la membrane et la plaquette inférieure, cet intervalle comprenant un accès, et les deux plaquettes isolantes coopèrent avec la périphérie des trois plaquettes de silicium assemblées pour définir une enceinte fermée.

Selon un mode de réalisation de la présente invention, les plaquettes de silicium comprennent chacune un cadre extérieur relié à leur partie centrale par un pied, les plaquettes isolantes venant enfermer les plaquettes de silicium au niveau du cadre extérieur tout en ménageant entre ces plaquettes isolantes et l'ensemble des plaquettes de silicium un espace libre.

Selon un mode de réalisation de la présente invention, il est prévu deux lames formant résonateur entre le plot et des parties distinctes du cade pour permettre la formation d'un montage différentiel.

Selon un mode de réalisation de la présente invention, le plot est disposé dans la partie centrale de la membrane selon une première direction et au tiers de la longueur de la membrane selon une deuxième direction orthogonale à la première.

Selon un mode de réalisation de la présente invention, le plot est relié au cadre, au niveau de la plaquette de silicium médiane, par une surépaisseur de la membrane formant charnière.

Selon un mode de réalisation de la présente invention, des électrodes d'excitation et de détection sont formées sur la face inférieure de la plaquette de matériau isolant supérieure en regard de ladite lame de silicium formant un résonateur et sont conformées pour exciter cette lame dans le sens transverse.

Un premier avantage de la présente invention réside dans la simplicité de fabrication qui résulte du fait que la structure en silicium est constituée de trois plaquettes qui peuvent être fabriquées et découpées séparément. Une fois assemblées par des procédés de soudure de silicium sur silicium, l'assemblage des trois plaquettes se comporte comme une structure monolithique.

Un autre avantage de la présente invention, lié à sa fabrication à partir de trois plaquettes de silicium, réside dans le fait qu'il n'est pas nécessaire de prévoir des zones de silicium surdopées pour définir des points d'arrêt d'attaque. Il en résulte que la structure finale, ne comprenant pas de région de silicium dopé est plus stable mécaniquement.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 représente une vue en coupe schématique d'un mode de réalisation d'un micro-capteur de pression selon la présente invention ;
la figure 2 représente une vue en perspective de l'assemblage de deux des plaquettes du capteur de la figure 1 ;
les figures 3A, 3B, 3C représentent, en perspective chacune des trois plaquettes de silicium ;
la figure 4 représente une vue en coupe simplifiée de deux des plaquettes correspondant au mode de réalisation de la figure 2 ;
la figure 5 représente une vue en coupe simplifiée d'une variante de la structure illustrée en figure 4 ;
la figure 6 représente une vue en perspective d'une variante de réalisation de la structure représentée en figure 2 ;
la figure 7 est un graphique illustrant la différence de sensibilité entre les modes de réalisation des figures 2 et 6 ; et
les figures 8A et 8B sont une vue de dessous et une vue en coupe partielle illustrant un mode de réalisation de structure d'électrodes.

On notera que ces figures sont schématiques et ne sont pas tracées à l'échelle, ayant uniquement pour but de faire comprendre la présente invention.

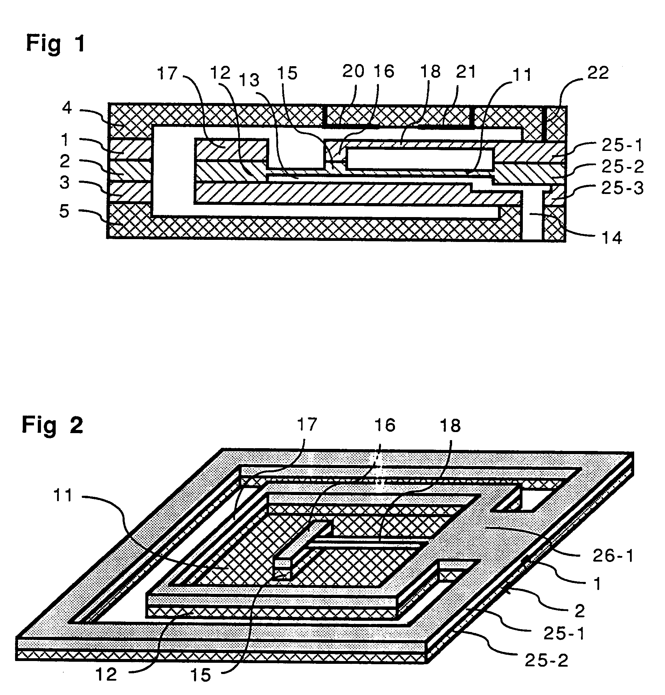

Comme le représente la vue en coupe de la figure 1, le micro-capteur selon la présente invention comprend trois plaquettes de silicium 1, 2 et 3 prises en sandwich entre deux plaquettes d'un matériau isolant, couramment du verre 4 et 5. Ces plaquettes sont assemblées par des techniques classiques de soudure silicium/silicium et verre/silicium, par exemple par soudure anodique.

La figure 2 représente une vue en perspective des plaquettes 1 et 2 assemblées.

La plaquette 2 comporte une membrane mince 11 entourée d'un cadre 12. La deuxième et la troisième plaquette de silicium délimitent entre elles une première enceinte 13 susceptible de communiquer avec la pression à mesurer par une ouverture 14 ménagée dans la troisième plaquette de silicium et dans la deuxième plaquette de verre. Ainsi, en fonction de la pression appliquée à l'enceinte 13 la membrane 11 se déforme. Cette membrane 11 porte, de façon décentrée, une première partie 15 d'un plot. La première plaquette 1 porte une deuxième partie 16 complémentaire du plot et comporte un cadre 17 complémentaire du cadre 12. L'élément détecteur de ce capteur de pression consiste en une lame de silicium 18 formée dans la première plaquette et s'étendant du plot au cadre de la façon illustrée.

Ainsi, quand la membrane 11 se déforme sous l'effet d'une pression appliquée, le plot s'incline et la tension de la lame 18 varie. Cette lame 18 constitue une poutre vibrante ou résonateur qui peut être excité en vibration par un champ alternatif appliqué sur une première électrode 20 formée sur la plaquette de verre supérieure 4 et dont la fréquence propre de vibration peut être détectée par une deuxième électrode 21 formée sur la plaquette 4. Cette fréquence constitue une image de la contrainte appliquée à la poutre et donc de la pression à mesurer. Une troisième électrode 22 permet de fixer le potentiel de la poutre vibrante 18.

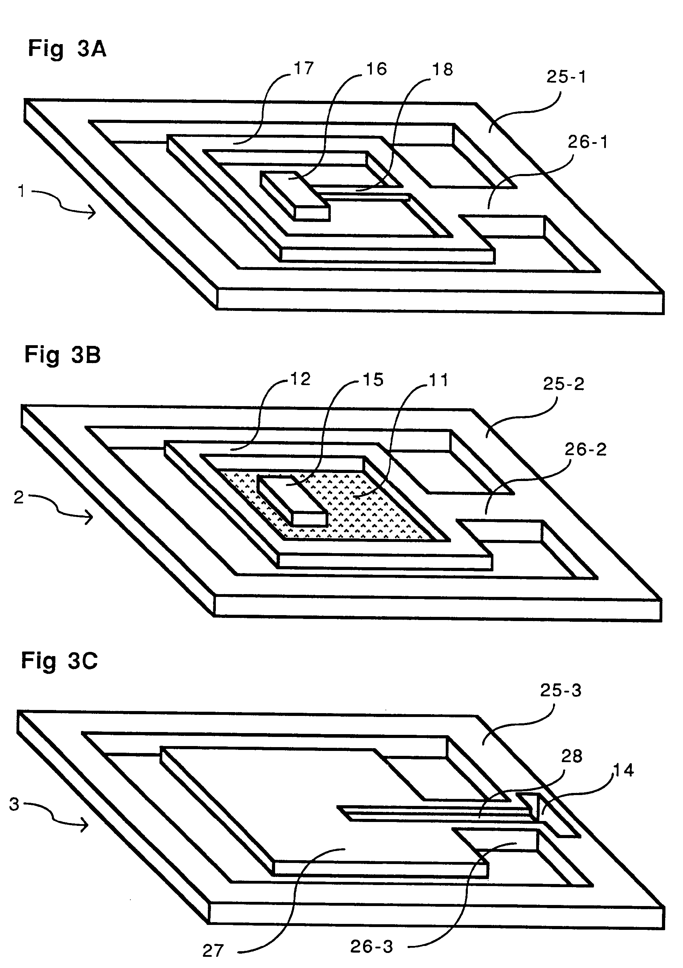

Selon un aspect de la présente invention, et comme le représentent les figure 2 et 3, chacune des plaquettes 1, 2 et 3 comprend un cadre extérieur 25-1, 25-2, 25-3, relié à la partie centrale de la plaquette par un pied 26-1, 26-2, 26-3. Les plaquettes de verre 4 et 5 viennent prendre appui sur le cadre externe d'où il résulte que la partie centrale des trois plaquettes 1, 2 et 3, correspondant à la partie active du capteur ne présente pas de liaison mécanique directe avec les plaquettes de verre ce qui confère au capteur une immunité par rapport aux vibrations externes ainsi qu'une immunité par rapport aux phénomènes de dilatation différentielle entre le silicium et le verre résultant de variations thermiques.

Les plaquettes de verre 4 et 5 et les cadres extérieurs 25 des plaquettes de silicium 1,2 et 3 délimitent une enceinte mise sous atmosphère contrôlée.

Les figures 3A, 3B et 3C représentent une vue explosée des trois plaquettes de silicium 1, 2 et 3.

Les plaquettes 1 et 2 des figures 3A et 3B ont déjà été décrites en détail précédemment. La plaquette 3 illustrée en figure 3C comprend une région centrale 27 dont la périphérie correspond à celle des cadres 12 et 17 des figures 3A et 3B. Dans le mode de réalisation de la figure 3C, la face supérieure de cette région centrale 27 est plane. Cela suppose que la membrane 11 de la figure 3B est légèrement en retrait par rapport à la surface inférieure du cadre 12 pour laisser la place à l'enceinte 13 indiquée en figure 1. Dans une autre réalisation, on pourrait prévoir que la partie centrale de la région 27 est partiellement évidée. En outre, la figure 3C représente un canal 28 obtenu par gravure anisotrope du silicium, permettant de faire communiquer le trou d'accès 14 à l'enceinte 13.

A titre d'exemple non limitatif, on pourrait prévoir un capteur ayant les dimensions suivantes :
- Epaisseur des plaques 1, 2, 3 :: 0,3 mm
- Epaisseur des plaques 4 et 5 :: 0,5 mm
- Epaisseur de la lame 18 :: 0,02-0,04 mm
- Epaisseur de la membrane 11 :: 0,03-0,06 mm
- Longueur de lame 18 :: 0,8-2 mm
- Dimension de la membrane :: 2x2 mm²
- Fréquence de vibration :: 30 à 200 kHz.

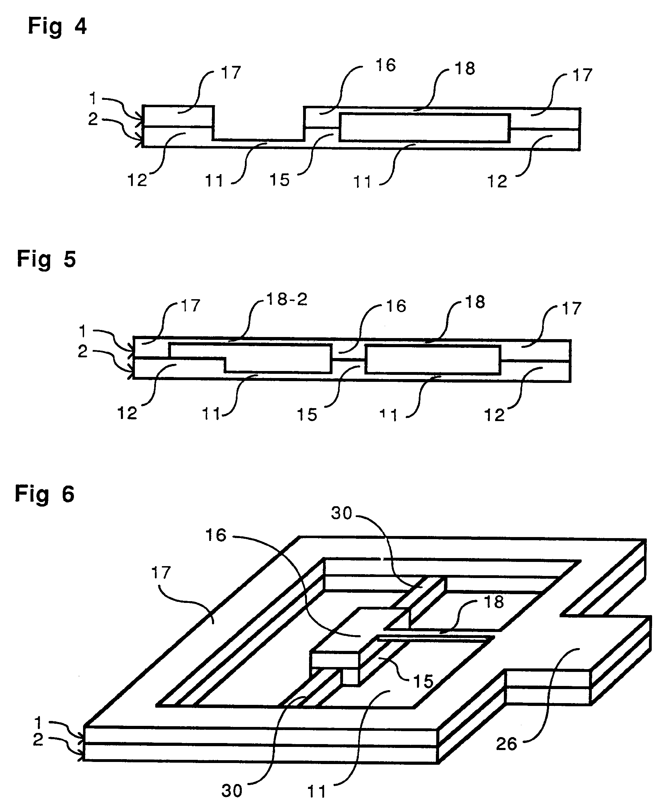

La figure 4 représente une vue en coupe agrandie et très schématique de l'ensemble des plaquettes 1 et 2, sans le pied 26 et le cadre externe 25. On note que le plot 15 se trouve à peu près au tiers de la dimension longitudinale de la membrane, et à peu près au centre de la dimension transversale de cette membrane.

La figure 5 illustre, selon le même mode de représentation que celui de la figure 4, une variante de réalisation de la présente invention permettant d'obtenir un capteur différentiel. La partie de la figure 5 située à la droite du plot 15-16 est identique à la figure 4. Dans la partie gauche, le cadre 12 de la plaquette 2 est élargi vers l'extérieur et surmonté à sa partie externe du cadre 17 qui est également relié au plot 16 par une deuxième lame de silicium formant résonateur 18-2. Les lames 18 et 18-2 auront par exemple de mêmes longueurs. Ainsi, quand le plot se déplace, les poutres vibrantes 18 et 18-2 sont soumises à des efforts contraires et, en mesurant la différence entre les deux fréquences de résonance des deux poutres, on s'affranchit d'éventuelles erreurs dues aux dérives de fréquence à pression nulle de chaque poutre. Ces dérives ont pour origine toutes les influences externes au microcapteur (température, accélération, etc.). Bien entendu, la plaquette supérieure 4 comprendra des électrodes propres à exciter et à détecter les vibrations de la poutre 18-2 en plus des électrodes associées à la poutre 18.

La figure 6 illustre une autre variante de la présente invention. Cette figure représente les plaquettes supérieure 1 et médiane 2 dans un mode de représentation similaire à celui de la figure 2 sauf que le cadre externe 25 n'a pas été représenté. La différence principale entre le mode de réalisation de la figure 6 et celui de la figure 2 réside dans le fait que la partie inférieure 15 du plot faisant partie de la plaquette 2 est reliée, perpendiculairement à la direction de la poutre vibrante 18, au cadre 12 par l'intermédiaire de charnières 30. Ainsi, quand la membrane 11 est déformée par l'application d'une pression, le plot 15-16 se déplace seulement en rotation par rapport à la charnière 30 et non pas dans une direction orthogonale au plan de la membrane.

L'expérience montre qu'il résulte de la présence des charnières une moindre dépendance entre la sensibilité du capteur et l'épaisseur de la membrane. Ainsi, la sensibilité du capteur dans la variante illustrée en figure 6 permet de s'affranchir de certains paramètres de fabrication.

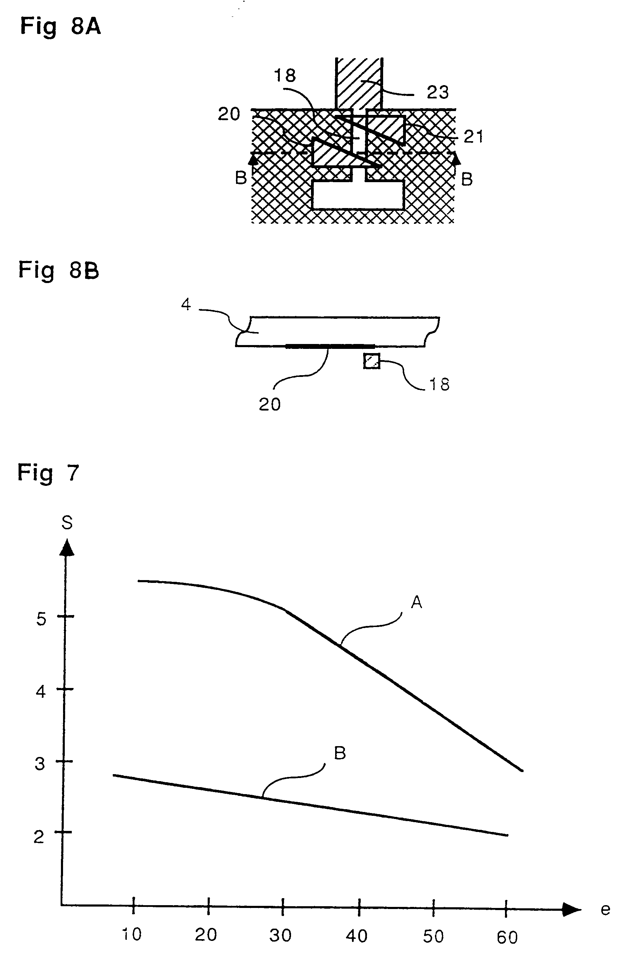

La figure 7 illustre cette caractéristique. Dans cette figure, les abcisses représentent des épaisseurs de membrane (e) en micromètres et les ordonnées une sensibilité (S) dans une échelle arbitraire. On voit que, dans la plage d'épaisseurs de membrane allant de 10 à 60 micromètres, la sensibilité varie d'un facteur important dans le cas où il n'y a pas de charnière (courbe A) et d'un facteur beaucoup plus faible dans le cas de la figure 6 où il y a des charnières (courbe B).

Les figures 8A et 8B sont destinées à illustrer un mode de réalisation de la présente invention relatif à l'excitation de la poutre vibrante 18. En effet, on constate que la sensibilité du dispositif et notamment l'obtention d'un bon découplage entre le résonateur et les autres éléments du capteur est meilleur si la poutre 18, au lieu de vibrer dans un plan orthogonal à la membrane, vibre dans un plan transversal, parallèle au plan de la membrane. Pour cela, on pourra donner aux électrodes 20 et 21 formées sur la plaquette de verre supérieure 4 la forme illustrée en figure 8A qui provoque une vibration transverse.

La figure 8B est une vue en coupe selon la ligne B-B de la figure 8A. En figure 8A, la référence 23 désigne une métallisation formée sur le cadre 17, le pied 26-1 et le cadre 25-1 destinée à établir un meilleur contact vers la traversée de reprise de contact 22 illustrée en figure 1. Dans la poutre, la conduction sera assurée par la conductivité du silicium lui-même. On peut toutefois prévoir une métallisation supplémentaire bien que cela soit susceptible d'affecter le fonctionnement du dispositif. On notera que le fait que la lame 18 se termine sur le cadre (et non sur un deuxième plot) facilite sa connexion.

La fabrication d'une structure telle que décrite précédemment, et notamment la gravure des plaquettes 1, 2 et 3, utilise des procédés classiques de fabrication de composants semiconducteurs. Les gravures seront classiquement réalisées par des procédés de photolithographie et d'attaque chimique. Les formes relativement simples du capteur selon l'invention n'entraînent pas de difficultés particulières.

L'homme de l'art notera que la présente invention pourra tirer partie de procédés collectifs de fabrication, chacune des plaquettes 1, 2 et 3 faisant partie d'une tranche de silicium comprenant un grand nombre de plaquettes identiques.

La présente invention est bien entendu susceptible de diverses variantes de fabrication et de structures qui apparaîtront à l'homme de l'art. Notamment la forme du résonateur pourra être plus complexe qu'une simple lame. Par exemple, ce résonateur pourra présenter des ailes orthogonales et vibrer en torsion, des électrodes adaptées étant prévues. Il peut aussi être de dimension supérieure à la membrane en décalant le point d'attache sur le cadre. On peut aussi optimiser la forme du dispositif pour différentes gammes de pression.

La détection de la vibration du résonateur pourra être réalisée par des moyens autres que capacitifs, par exemple en plaçant une jauge de contrainte au voisinage de la région d'encastrement de la poutre dans le cadre.

L'excitation de la poutre pourra être réalisée par d'autres moyens tels que des forces électromagnétiques, en déposant un conducteur sur la poutre, des forces piézoélectriques, en déposant un matérieu piézoélectrique sur une partie de la poutre, ou encore par des procédés d'excitation thermique.

## Revendications

1. Micro-capteur de pression caractérisé en ce qu'il comprend entre deux plaquettes de matériau isolant :
une plaquette de silicium inférieure (3) formant embase,
une plaquette de silicium médiane (2) constituant une membrane (11) entourée d'un premier cadre (12), une première partie (15) d'un plot étant formée en un emplacement décentré de la membrane,
une plaquette de silicium supérieure (1) comprenant un premier cadre (17) correspondant à celui de la plaquette médiane, une deuxième partie (16) dudit plot et une lame de silicium (18) constituant un résonateur reliant le haut du plot à une région haute du cadre,
dans lequel un intervalle de mesure (13) est ménagé entre la membrane et la plaquette inférieure, cet intervalle comprenant un accès (14, 28), et dans lequel les deux plaquettes isolantes (4,5) coopèrent avec la périphérie des trois plaquettes de silicium assemblées pour définir une enceinte fermée.

2. Micro-capteur selon la revendication 1, caractérisé en ce que les plaquettes de silicium comprennent chacune un deuxième cadre extérieur (25) relié à leur premier cadre par un pied (26), lesdites plaquettes isolantes venant enfermer les plaquettes de silicium au niveau dudit cadre extérieur tout en ménageant entre ces plaquettes isolantes et l'ensemble des plaquettes de silicium un espace libre.

3. Micro-capteur selon la revendication 1, caractérisé en ce qu'il comprend deux lames (18, 18-2) formant résonateur entre le plot et des parties distinctes du cadre pour permettre la formation d'un montage différentiel.

4. Micro-capteur selon la revendication 1, caractérisé en ce que le plot est disposé dans la partie centrale de la membrane selon une première direction et au tiers de la longueur de la membrane selon une deuxième direction orthogonale à la première.

5. Micro-capteur selon la revendication 1, caractérisé en ce que le plot est relié au cadre, au niveau de la plaquette de silicium médiane, par une surépaisseur de la membrane formant charnière (30).

6. Micro-capteur selon la revendication 1, caractérisé en ce que des électrodes d'excitation et de détection sont formées sur la face inférieure de la plaquette de matériau isolant supérieure en regard de ladite lame de silicium formant un résonateur et sont conformées pour exciter cette lame dans le sens transverse.

## Patentansprüche

1. Miniatur-Druckfühler, dadurch gekennzeichnet, daß er zwischen zwei Platten aus isolierendem Material aufweist:
eine untere Platte (3) aus Silizium, die eine Basis bildet,
eine mittlere Platte (2) aus Silizium, die eine von einem ersten Rahmen (12) umgebene Membran (11) bildet, wobei ein erster Teil (15) eines Klotzes in einer dezentralen Anordnung auf der Membran ausgebildet ist,
eine obere Platte (1) aus Silizium, die einen ersten Rahmen (17) entsprechend demjenigen der mittleren Plakette aufweist, wobei ein zweites Teil (16) des genannten Klotzes und eine Siliziumzunge (18) einen Resonator bilden, der die Oberseite des Klotzes mit einem oberen Bereich des Rahmens verbindet, wobei ein Meßraum (13) zwischen der Membran und der unteren Platte eingerichtet ist und dieser Raum einen Zugang (14, 28) aufweist, und wobei die beiden isolierenden Platten (4, 5) mit dem Umfang der drei zusammengesetzten Platten aus Silizium zusammenarbeiten, um einen geschlossenen Hohlraum zu definieren.

2. Mikrofühler nach Anspruch 1, dadurch gekennzeichnet, daß die Platten aus Silizium jeweils einen zweiten äußeren Rahmen (25) aufweisen, der mit ihrem ersten Rahmen über einen Fuß (26) verbunden ist, wobei die genannten isolierenden Platten die Platten aus Silizium auf dem Niveau dieses äußeren Rahmens umschließen, wobei jedoch zwischen den isolierenden Platten und der Anordnung der Platten aus Silizium ein freier Raum verbleibt.

3. Mikrofühler nach Anspruch 1, dadurch gekennzeichnet, daß er zwei Zungen (18, 18-2) aufweist, die zwischen dem Klotz und unterschiedlichen Bereichen des Rahmens Resonatoren bilden, um die Ausbildung einer Differentialanordnung zu ermöglichen.

4. Miniaturfühler nach Anspruch 1, dadurch gekennzeichnet, daß der Klotz in dem mittleren Bereich der Membran längs einer ersten Richtung und in einem Drittel der Länge der Membran längs einer zweiten Richtung senkrecht zu der ersten angeordnet ist.

5. Miniaturfühler nach Anspruch 1, dadurch gekennzeichnet, daß der Klotz mit dem Rahmen im Bereich der mittleren Platte aus Silizium durch eine Verdickung der Membran, die ein Scharnier (30) bildet, verbunden ist.

6. Miniaturfühler nach Anspruch 1, dadurch gekennzeichnet, daß Elektroden für die Erregung und für die Messung auf der unteren Fläche der oberen Platte aus isolierendem Material in Richtung auf die einen Resonator bildenden Siliziumzunge ausgebildet und geformt sind, um diese Zunge in Querrichtung zu erregen.

## Claims

1. A pressure microsensor characterized in that it comprises between two plates of insulating material:
a bottom silicon plate (3) forming a base,
a middle silicon plate (2) constituting a diaphragm (11) surrounded by a first frame (12), a first part (15) of a stud being formed at a decentred location of the diaphragm,
a top silicon plate (1) comprising a frame (17) corresponding to that of the middle plate, a second part (16) of said stud and a silicon blade (18) constituting a resonator connecting the top of the stud to a high area of the frame, wherein a measuring interval (13) is provided between the diaphragm and the bottom plate, this interval comprising an access (14, 28), and wherein the two insulating plates (4, 5) cooperate with the border of the three assembled silicon plates to form a closed cavity.

2. A microsensar as claimed in claim 1, characterized in that the silicon plates each comprise a second external frame (25) fixed to their first frame by an extension (26), said insulating plates enclosing the silicon plates about said external frame leaving between these insulating plates and the group of silicon plates a free space.

3. A microsensor as claimed in claim 1, characterized in that it comprises two blades (18, 18-2) forming resonators between the stud and distinct parts of the frame to enable the achievement of a differential assembly.

4. A microsensor as claimed in claim 1, characterized in that the stud is disposed in the central part of the diaphragm according to a first direction and at a third of the length of the diaphragm according to a second direction orthogonal to the first.

5. A microsensor as claimed in claim 1, characterized in that the stud is fixed to the frame, of the middle silicon plate, by a rib of the diaphragm forming a hinge (30).

6. A microsensor as claimed in claim 1, characterized in that the excitation and detection electrodes are farmed on the bottom face of the top insulating plate, facing said silicon blade forming a resonator and are shaped such as to excite this blade in the transverse direction.
